# EUROPÄISCHE PATENTSCHRIFT

(11) **EP 2 327 635 B1**
(45) Veröffentlichungstag und Bekanntmachung des Hinweises auf die Patenterteilung: **22.08.2012**
(21) Anmeldenummer: 11000562.6
(22) Anmeldetag: 26.06.2009
(51) Int. Cl.: B65D 77/20, B32B 15/20, B32B 15/08, B32B 27/28, B32B 27/08, B32B 27/32, B32B 3/24, B32B 7/06

(54) **Verfahren zur Herstellung einer Platine zum Verschließen eines Bechers**
Method of manufacturing a lid for a container
Procédé de fabrication d'un couvercle pour un récipient

(30) Priorität: 27.06.2008 EP 08450095; 24.03.2009 EP 09450063
(43) Veröffentlichungstag der Anmeldung: 01.06.2011
(62) Teilanmeldung aus: 09768605.9
(73) Patentinhaber: Constantia Teich GmbH, 3200 Weinburg (AT)
(72) Erfinder: Schedl, Adolf, Ing., 3200 Obergrafendorf (AT); Kornfeld, Martin, Dr., 3400 Klosterneuburg (AT); Nekula, Lambert, 3202 Hofstetten (AT); Reiterer, Franz, Ing., 3131 Getzersdorf (AT); Wegenberger, Alfred, DI Dr. mont., 3550 Langenlois (AT)
(74) Vertreter: Patentanwälte Barger, Piso & Partner

(56) Entgegenhaltungen:
- WO-A1-2007/065055

## Beschreibung

Die Erfindung betrifft ein Verfahren zur Herstellung einer Platine zum Verschließen eines Bechers entsprechend dem Oberbegriff des Anspruches 1 und der weiter unten abgehandelten WO 2007/088436 A bzw. der ebenfalls weiter unten abgehandelten WO 2007/065055 A.

Eine Platine, wie sie durch das Verfahren erhalten werden kann, ist beispielsweise aus der WO 2008/006123 A, entsprechend dem AT 009 750 U und der EP 2 040 915 A, veröffentlicht 2008, bekannt. Dabei konzentriert sich diese Druckschrift auf den Aufbau der die Kontaktfläche ausbildenden Materialschichten auf beiden Seiten der Kontaktfläche.

Aus der WO 2007/065 055 A, entsprechend der EP 1 954 582 A , veröffentlicht 2007, ist es bekannt, die beiden Schichten miteinander zu verkleben, die Schwächungslinie wird mittels eines nicht näher erläuterten Laserstrahls eingebracht.

Aus der EP 0 812 782 A, veröffentlicht 1997, ist eine derartige Platine ebenfalls bekannt. Dabei besteht die Kunststoffschichte aus zumindest zwei Lagen, wobei die innerste Lage Einschnitte oder Schwächungslinien nahe dem Rand aufweist, die ovale Bereiche begrenzen. Nach dem Aufsiegeln auf einen gefüllten Becher kommt es beim Abziehen der Platine zufolge der vorbestimmten Haftverhältnisse zwischen den einzelnen Schichten und der Siegelstärke am Becherrand dazu, dass die innere Lage der Kunststoffschichte am Behälterrand fest angesiegelt bleibt, dass die äußere Lage der Kunststoffschichte und die Aluminiumfolie abgezogen werden, und dass der ovale Bereich, der durch die Schwächungslinien der innersten Schichte vorgegeben, ist beim Abpeelen auf der äußeren Lage haften bleibt und so eine für einen Trinkhalm oder das Trinken aus dem Becher günstige Öffnung frei gibt.

Die Schaffung des Zusammenhaltes der einzelnen Schichten/Lagen und der Schwächungslinien erfolgt durch Schmelzvorgänge, die durch entsprechend geheizte und profilierte Walzen beim Durchlaufen des Filmes bewirkt werden. Obwohl diese aus dem Jahre 1996 stammende Anmeldung von einem der größten Platinenhersteller Europas stammt, kam der Gegenstand der Anmeldung nie auf den Markt, es war nicht möglich, ihn in kaufmännisch vertretbarer Zeit und zu kaufmännisch vertretbaren Kosten herzustellen.

Aus der EP 1 278 630 B ist eine ähnliche Platine bekannt, die nach dem Öffnen wiederverschließbar sein soll. Dazu ist in gewissen Bereichen der Platinen ein drucksensitiver Klebstoff vorgesehen. Abgesehen von der Wiederverschließbarkeit bestehen verschiedentlich Ähnlichkeiten mit der erstgenannten Druckschrift, wenn auch die Platine wegen des Zieles der Wiederverschließbarkeit mechanisch stabiler ausgeführt ist. Für eine nur einmalige Öffnung ist diese Platine zu aufwendig, auch hat sich bei dieser Konzeption eine Unzuverlässigkeit betreffend die Abtrennung zwischen den Schichten und den Verbleib der Innenschicht im Öffnungsbereich herausgestellt.

Jüngeren Datums ist die AT 501 789 B der Anmelderin, die die gleichen Ziele hat wie die erstgenannte Druckschrift und ebenfalls die Schwächungslinien mittels eines heizbaren Werkzeuges auf thermisch-mechanischem Weg zu schaffen versucht. Auch hier ist eine zuverlässige und kaufmännisch vertretbare Herstellung nicht geglückt.

Eine schon weit zurückliegende, auf dem Jahre 1979 stammende Druckschrift, die DE 29 01 581 A, hat für spezielle Becher mit Rollrand eine Lösung für das Abziehen einer Schicht einer mehrschichtigen Platine mit Ausbildung einer Öffnung im verbleibenden Platinenmaterial gesucht, doch kam auch dieses Produkt nie auf den Markt.

Eine praktisch ebenso alte Druckschrift, die FR 2 503 036 A, schlägt eine ganz ähnliche Lösung vor, nämlich die Koextrusion einer Aluminiumfolie und einer Kunststoffschichte, letztere ist durch Schwächungslinien im vorgegebenen Bereichen vom Verbund abgetrennt und wird beim Abpeelen der Platine an diesen Stellen vom Aluminium mitgenommen, sodass ein Deckel mit Öffnung auch nach dem Öffnen am Rand des Bechers verbleibt.

Noch deutlich später (1987) wurde von der Anmelderin der letztgenannten französischen Druckschrift in den USA eine Verbesserung unter Schutz gestellt, auf den Markt kam trotz des großen patentrechtlichen Aufwandes keines der Produkte.

Eine auf das Jahr 1971 zurückgehende, etwas unterschiedliche Aufgaben betreffende Druckschrift ist die DE 22 40 234 A, die bei einer schalenförmigen Verpackung für Frischfleisch eine zweilagige Abdeckfolie mit dem Behälterrand versiegelt, wobei die äußere Schichte sauerstoffundurchlässig und die innere Schichte sauerstoffdurchlässig ist. Zufolge einer Schwächung der inneren Schichte im Bereich einer Abziehlasche ist es möglich, die äußere Schichte für sich allein abzuziehen und so den Reifeprozess für das Fleisch beginnen zu lassen. Diese Verpackung konnte sich, wenn sie überhaupt je auf dem Markt erschien, nicht durchsetzen.

Eine junge, wiederum gattungsgemäße, Druckschrift ist die WO 2007/088436 A, die eine ganze Reihe von Varianten der bisher abgehandelten (besonders der zuerst genannten) Druckschriften enthält. Bemerkenswert daran ist, dass die Abhandlungen äußert kursorisch erfolgen, sodass eigentlich nur Ideen vermittelt werden, nicht aber wirklich funktionsfähige Lösungen. Dies zeigt sich schon in einem Vergleich der Fig. 4 mit der zugehörigen Beschreibung, denn die Fig. 4 soll den Fall darstellen, in dem die äußerste Seite der Platine die Schwächungslinien aufweist, was aber bedeutet, dass der schraffierte Teil mit dem Bezugszeichen 24, eben weil dort die äußerste Schichte abgetrennt wird, beim Abziehen nicht die dargestellte Position einnehmen kann.

Es wird weiters im Text ausgeführt, dass die Schwächungslinien auch an der innersten Schichte vorgesehen werden können oder, wenn mehr als zwei Schichten/Lagen vorgesehen sind, auch an Zwischenschichten. Wie dies einerseits bei der Herstellung, andererseits beim Öffnen, funktionieren soll, wird nicht weiter ausgeführt.

Es werden auch für die Herstellung der Schwächungslinien alle nur erdenkbaren Möglichkeiten genannt, ohne dass auch nur eine davon ansatzweise näher beschrieben wird. Es heißt ganz lapidar, dass ein Stanzwerkzeug oder ähnliches, oder ein Laserstrahl verwendet werden kann. Diese Druckschrift ist, wie bereits erwähnt, jüngeren Datums (Priorität 02. Februar 2006) und es ist noch kein dem Inhalt dieser Druckschrift entsprechendes Produkt am Markt erschienen; mit den in der Anmeldung genannten Informationen wird ein solches wohl auch kaum im industriellen Maßstab zu fertigen sein.

Es gibt bei üblichen Platinen, die entlang eines umlaufenden Siegelrandes mit einem Becher zum vollflächigen Öffnen versiegelt werden, dahingehend Probleme, dass die tatsächlich erzielten Siegelstärken immer wieder zu groß für ein ordnungsgemäßes Öffnen sind und es daher zum Einreißen der Platine, zum Verschütten des Inhaltes des Bechers wegen der notwendigen hohen Kraftaufwendung und ähnlich unangenehmen Effekten kommt. Die Ursache dafür liegt darin, dass die Abfüller, bei denen ja die Versiegelung erfolgt, vor allem darauf achten, dass die Siegelnaht dicht ist und daher dazu neigen, beim Auftreten von Problemen, die unter Umständen auf verschmutztes Werkzeug, schlecht justierte Platinenzufuhr, etc. zurückzuführen sind, einfach die Parameter für die Siegelstärke (Temperatur, Druck, Dauer) an der Siegelmaschine so zu verändern, dass die gewünschte Dichtheit sich jedenfalls einstellt. Dies führt aber fast zwangsläufig dazu, dass an einzelnen Stellen der Siegelnaht die erwähnten überfesten Verbindungsbereiche geschaffen werden, die dem Benutzer die genannten Unannehmlichkeiten bereiten. Dieses Problem zu lösen, ist ein Ziel einer Ausgestaltung der Erfindung.

Die Anmelderin hat sich mit den oben genannten Problemen und den Lösungsversuchen der genannten Druckschriften seit mehreren Jahren intensiv beschäftigt und ist nunmehr zu einer praktikablen Lösung gekommen, durch die die gewünschten Ziele erreicht und die geschilderten Nachteile vermieden werden.

Erfindungsgemäß geschieht dies bei einem Verfahren der eingangs definierten Art dadurch, dass die im kennzeichnenden Teil des Anspruches 1 angegebenen Verfahrensschritte durchgeführt werden. Unteransprüche betreffen vorteilhafte Ausgestaltungen und Weiterentwicklungen der Erfindung.

Auf diese Weise erreicht man eine auf kleinste Flächen bzw. auf kleinsten Raum beschränkte Schwächung der Kunststoffschichte, deren Eigenschaften, nach heutigem Wissensstand, auf die so gut wie ausschließlich thermische Belastung des Kunststoffmaterials zurück zu führen ist, wodurch beim Abpeelen die von der Schwächungslinie umgrenzten Gebiete zuverlässig auf der Aluminiumfolie haften bleiben und eine sauber begrenzte Entnahmeöffnung bzw. Trinköffnung von der am Becherrand angesiegelt bleibenden Kunststoffschichte ausgebildet wird.

Die geringen Abmessungen der beeinträchtigten Bereiche und die Beeinträchtigung durch Wärme allein, ohne drückende oder scherende Beanspruchung, somit zumindest im Wesentlichen ohne mechanische Materialdeformation, führen auch dazu, dass trotz der Schwächungslinien der Zutritt von dem im Becher befindlichen Material zur Aluminiumschicht nicht stattfindet. Dies ist insbesondere bei Lebensmitteln mit merklichem Anteil an Fruchtsäuren von Bedeutung, da diese zu einer lokalen Verfärbung des Aluminiums führen könnten, was aus optischen Gründen unerwünscht ist.

Im Folgenden werden die einzelnen Bestandteile der Platine und die Vorgänge beim Lasern detaillierter beschrieben.

Die Aluminiumfolie kann aus den für Platinen üblichen Aluminiumlegierungen bzw. dem Aluminium mit dem üblichen Reinheitsgrad bestehen. Die Oberfläche kann glänzend oder matt sein, als Stärke können beispielsweise 50 µm angegeben werden, doch sind hier große Schwankungen möglich. Bevorzugt wird eine sogenannte "weiche" Aluminiumfolie verwendet, für den Fachmann auf dem Gebiete der Platinenherstellung ist dies ein geläufiger Begriff und bedarf daher hier keiner näheren Erörterung.

Auf der Außenseite der Aluminiumfolie, das ist die der koextrudierten Kunststoffschicht abgewandten Seite, befindet sich üblicherweise ein Aufdruck, dieser wird von der erfindungsgemäßen Ausgestaltung der Platine nicht berührt und berührt seinerseits die Erfindung nicht, er kann daher auf alle im Stand der Technik bekannten Arten aufgebracht werden, üblicherweise auf eine Schichte von Druckvorlack, und kann beispielsweise ein UV-Flexodruck sein. Auch die Verwendung einer geprägten Aluminiumfolie ist möglich.

Auf der der koextrudierten Kunststoffschicht zugewandten Seite kann eine Schicht aus Heißsiegellack, üblicherweise PVC-frei und bevorzugt farblos, aufgebracht sein, um die Stärke des Zusammenhaltes zwischen der Aluminiumfolie und der Kunststoffschichte auf das gewünschte Maß zu bringen. Gängige Werte für die verwendete Menge liegen im Bereich von etwa 6 g/m². Diese Heißsiegellackschichte ist nicht zwingend notwendig, einige wenige Versuche lassen den Fachmann erkennen, ob und in welchem Ausmaß sie bei der jeweiligen Anwendung benötigt wird bzw. vorteilhaft ist.

Der bisher beschriebene Aufbau ist sowohl bei PE basierenden als auch bei PP basierenden, koextrudierten, gegebenenfalls mehrlagigen, Schichten gleich. Im Folgenden werden verschiedentlich Prozentsätze angegeben, es handelt sich dabei immer um Gewichtsprozente, soferne nicht speziell andere Bezugsgrößen angegeben sind.

Wenn ein PE-basierendes Koextrudat verwendet wird, kann es gefüllt sein, beispielsweise mit Talk (z.B. CC7209 von Borealis), Kreide, TiO₂, oder anderen aus dem Stand der Technik bekannten Füllstoffen, es können Farbstoffe zugesetzt werden, die insbesondere auf die Farbe des späteren Füllgutes abgestimmt sind; Füllgehalte bis 40 % und mehr sind möglich. Als Talk kann z.B. Finntalc M05 SL verwendet werden. Es gibt auch "vorgefüllte" Systeme, beispielsweise Maxithen HP 790101 von Gabriel Chemie, oder Carolen 252550 von Carova Compounding, die direkt dem Extruder zugeführt werden können.

Es können selbstverständlich auch ungefüllte PE Typen verwendet werden, wenn ihre rheologischen Eigenschaften für die Verarbeitung auf der zur Verfügung stehenden Beschichtungsanlage, insbesondere einer Breitschlitzdüse, geeignet sind. Dies ist für den Fachmann auf dem Gebiet der Extrusionstechnik in Kenntnis der Erfindung problemlos festzustellen. Geeignete MFI-Werte (Schmelzindex, beispielsweise nach DIN; 190°C, Belastung von 2,16 kg) liegen zwischen 2 und 10 g/10 min.
Beispiele für auf dem Markt erhältliche, brauchbare Produkte:
Escorene LD 252 von Exxon;
PG 7004 von Dow: WA 107672/01/014: 50 g;
PG 7008 von Dow;
CA 8200 von Borealis;
Bralen NA 7-25 von Slovnaft Petrochemicals.

Diese PE-Typen (im Regelfall PE-LD) (LD - Low Density; niedrige Dichte) können in reiner Form oder als Mischung eingesetzt werden. Zur Erhöhung der Steifigkeit kann PE-HD (HD - High Density; hohe Dichte) mit ähnlichem Fließverhalten beigesetzt werden, wenn zähere Mischungen benötigt werden, können auch kautschukartige Typen, sogenannte thermoplastische Elastomere (EPDM, etc.) zugesetzt werden. Auch die Zugabe von Polybutylen (etwa 8340 M oder DP 9217 von Basell oder EthylenCopolymeren wie EAA (Bezeichnung für Ethylen-Acrylsäure-Copolymer), EMA (Ethylen-Methacrylat-Copolymer) oder Ionomeren (Ethylen-Acrylsäurebasis, einzelne Säuregruppen sind durch Ionen ersetzt) im Ausmaß von bis zu 30 % ist möglich.

Wenn ein PP-basierendes Koextrudat verwendet wird, kann es ebenfalls gefüllt oder ungefüllt sein.

Ungefüllte Typen weisen bevorzugt einen MFI von 8 bis 22 g/10 min auf (Schmelzindex, beispielsweise nach DIN; 230°C, Belastung von 2,16 kg). In Frage kommen PP-Homopolymere, PP-Copolymere, verzweigte PP-Typen (sogenannte HMS-PP-Typen), Metocene, heterophasige PP-Typen, aber auch Mischungen, die in diesem Viskositätsbereich liegen, und sogenannte Blends. Zur Eigenschaftsverbesserung kann ein PE-Anteil zugefügt werden (z.B. WG 341 C von Borealis, das zu etwa 30 % PE enthält, oder auch ein anderes polyolefinbasierendes Material, z.B. Polybutylen). Die Eignung zur Verarbeitung zu flächigen Gebilden in Extrusionsanlagen kann im Zweifelsfall vom Fachmann auf dem Gebiet der Kunststoffextrusion leicht festgestellt werden, gegebenenfalls durch einige wenige Versuche im Labormaßstab. Ein eventuell vorhandener PE-Anteil, wie oben erwähnt, kann bei Platinen, die nicht sterilisiert werden, auch deutlich höher als die genannten 30 % sein.

Beispiele für auf dem Markt erhältliche, brauchbare Produkte:
WG 341C von Borealis;
Daploy WD 234 HMS von Borealis;
Hifax DKS 208 nat. von Basell;
Domolen 1011S von Domo.

Beispiel für eine Mischung:
56 % WG341C mit 30 % WD 234 HMS und 14 % HG 420 FB (von Borealis).

Gefüllte Typen sind kommerziell erhältlich, z.B. WG 350C von Borealis, können aber selbstverständlich auch selbst gemischt werden, so hat sich eine Mischung von 80 % WG341 C mit 20 % VATPOL 265F65 (mit 60 % Füllstoff) von SILON bewährt.

Als Farben können übliche Farbbatches verwendet werden, so für Kaffebraun HP 820761 oder PP 821361 von Gabriel Chemie, für Weiß bietet sich das übliche TIO₂ an.

Sowohl bei PE Basis als auch bei PP Basis sind mehrschichtige Aufbauten der Koextrusionsschicht möglich und in vielen Fällen vorteilhaft. Dabei können bei einem symmetrischen Aufbau die Außenschichten so gewählt werden, dass sie die bestmöglichen Eigenschaften für die Ausbringung des Koextrudats an der Breitschlitzdüse aufweisen und dass die Innenschicht(en) die gewünschten mechanischen und/oder thermischen Eigenschaften besitzen.

Es kann sowohl in diesem Fall, aber besonders bei asymmetrischem Aufbau, die von der Aluminiumfolie abgewandte Außenschicht (später gefäßseitig liegend) auch auf die Natur des Materials des Bechers/Gefäßes, auf dessen Rand die Platine gesiegelt wird, Rücksicht nehmen. So kann in diesem Fall diese Schichte aus Appeel 20D745 von DuPont, gegebenenfalls mit 2 bis 5 % Gleitadditiv wie Conpol 20S2 von DuPont sein, um sowohl gegen PS als auch gegen PP Becher zu siegeln.

Im Falle eines symmetrischen Aufbaues (dabei kann aber die Grammatur einander entsprechender Schichten unterschiedlich sein), wie beispielsweise: PG7004 (PE ungefüllt) // CC7209 (PE gefüllt) // PG7004 kann die Steifigkeit und Elastizität des Gesamtfilmes gezielt beeinflusst werden. Eine andere Kombination, die sich in Versuchen bewährt hat, ist: PG7004 // Appeel 20D745 (EMA ungefüllt) oder Appeel 20D855 (EMA mit Füllstoff), beide von DuPont // PG7004. Statt EMA können auch Ionomere, z.B. Surlyn 1652-E verwendet werden.

Praktisch brauchbare Zusammensetzungen sind weiters:
Bei PE-Basis: Dreischichtsystem, 70 µm: PG7004 14g // CC7209 49g // PG7004 7g.
Bei PP-Basis: Hifax DKS 208 nat 16g // WG350C 28g // Hifax DKS208 nat 6g; hier sind auch 22g //40g // 8g mit gutem Resultat möglich.

Eine besonders geeignete Kombination von Bestandteilen für die erfindungsgemäße Platine weist, im aufgesiegelten Zustand von außen nach innen gesehen, eine Aluminiumschichte, eine Schichte "Haftvermittler" und sodann zumindest eine, im Folgenden "funktionale Schicht" genannte Schichte auf. Wie aus dieser kursorischen Aufzählung hervorgeht, werden alle für einen Druck üblichen Schichten und auch andere nicht erwähnt, es betrifft die Darstellung dieser Kombination nur die Schichten, die zu beiden Seiten der Kontaktfläche, an der die Trennung erfolgt, deshalb oft auch Trennebene genannt, liegen.

Die aus dem eingangs genannten Stand der Technik ersichtlichen Schwierigkeiten einer ordnungsgemäßen Trennung der Schichten können gemäß diesem Aspekt der Erfindung dadurch beseitigt werden, dass auf dem Aluminium auf der der Trennebene zugewandten Seite eine Schichte eines "Haftvermittlers" vorgesehen ist, die mit dem Aluminium eine besonders enge Verbindung eingeht und so eine stark an ihn anhaftende Schichte bildet. Die daran anschließende funktionale Schichte und gegebenenfalls eine weitere, sogenannte Zweitschicht, ist so ausgewählt, dass sie gegenüber dem in Frage kommenden Becher oder Behälter, meist aus einem PP Material bestehend, möglichst fest siegelt. Es folgt daraus, dass die Haftung zwischen dem "Haftvermittler" und der mit ihm in Kontakt stehenden funktionellen Schicht sowohl geringer sein muss als die Haftung zwischen Aluminium und "Haftvermittler" als auch die Haftung zwischen funktioneller Schicht und Becher im Siegelbereich. Wenn neben der funktionellen Schicht noch zumindest eine Zweitschicht vorgesehen ist, gilt diese Bedingung auch für die Haftung in jeder der zwischen diesen gebildeter Kontaktflächen.

Erfindungsgemäß werden diese Bedingungen bei Verwendung eines "Haftvermittlers" auf der Basis der Ethylen-Acrylsäure-Copolymere, kurz EAA, auf hervorragende Weise erfüllt. Als besonders vorteilhaft ist hier nicht nur die ausgezeichnete Haftung des EAA in all seinen Konzentrationsbereichen gegenüber Aluminium in Form aller bei Platinen gebräuchlichen Legierungen und Ausbildungen anzusehen (mit steigender Haftung mit steigendem Acrylsäureanteil), sondern auch die Tatsache, dass EAA eine gute Haftung zu Polyethylen aufbaut und dass diese Haftung durch Erhöhung des Ethylenanteils am EAA gesteigert werden kann, somit umgekehrt durch Erhöhung des Acrylsäureanteils verringert werden kann. Dies ermöglicht es, in Kenntnis des Bechermaterials und der zu schaffenden Qualität des Verschlusses sowie des verwendeten Aluminiums, und der anderen Randbedingungen durch einige wenige Versuche die Zusammensetzung des EAA festzulegen, bei der die gewünschten Haft- und Trenneigenschaften für die Platine erreicht werden.

Als eine weitere Besonderheit des EAA ist anzumerken, dass es eine schlechte Haftung an Polypropylen besitzt, sodass es möglich ist, die gewünschten Haftwerte durch entsprechende Zusammensetzung der funktionellen Schichte, die mit dem EAA in Kontakt tritt, weiter zu beeinflussen. Wenn mehr als 50 % Polypropylenpolymere (Homopolymer, Copolymer und/oder TPO = thermoplastisches Olefin) vorliegen und ein gewisser, nach wenigen Versuchen feststellbarer Anteil an Polyethylen, bevorzugt unter 25 % liegend, so kann die notwendige Mindesthaftung an der Trennebene mit einem EEA mit etwa 9 % Acrylsäure erreicht werden, ohne zu einer so starken Haftung zu kommen, dass das Abpeelen problematisch wäre.

Bei einem höheren Acrylsäureanteil, beispielsweise von 12 % und darüber, ist es auch möglich, eine funktionelle Schicht mit einem PE-Anteil von 40 % und darüber zu verwenden, ohne den gewünschten Peeleffekt zu zerstören; es ist dieses System aus "Haftvermittler" und funktioneller Schicht durch die Anpassung an die jeweils bekannten Randbedingungen vom Fachmann in weiten Grenzen nutzbringend einsetzbar.

Dazu ist noch auszuführen, dass, wie beiden oben genannten Beispielen, in der funktionellen Schichte verschiedene Füllstoffe wie Talk, Titanoxid, Kreide und Farbpigmente verwendet werden können, die das Haftverhalten der Schicht selbst nicht merklich ändern. In Sonderfällen kann das PE durch Ethylen-Copolymere wie EMA (Ethylen-Methyl-Acrylat) zumindest teilweise ersetzt werden; die Schicht kann auch nur aus Polypropylen odereiner 80:20 Mischung PP:EMA bestehen.

Als weiteren Vorteil der Verwendung einer solchen im Wesentlichen PE und PP enthaltenden funktionellen Schichte ist zu nennen, dass der PE-Anteil das Verarbeitungsverhalten der Mischung günstig beeinflusst.

Es kann an die genannte funktionelle Schichte eine Zweitschicht anschließen, insbesondere, wenn dies zur Erzielung spezieller Effekte beim Siegeln wünschenswert ist, oder wenn aus irgendwelchen Gründen das Gut, mit dem die Platine in Berührung kommt, es angeraten erscheinen lässt. Ein weiterer Grund kann auch die Herstellung der Platinenbahn durch Coextrudieren sein, da die genannte funktionelle Schichte dazu neigt, einen sogenannten Düsenbart auszubilden, was immer wieder zu Störungen bei der Extrusion führt. Bei der Ausbildung eines solchen Düsenbartes kommt es zu Anlagerung, insbesondere von Füllstoff, an der Lippe der Extrusionsdüse, diese Anlagerungen stören die Ausbildung einer fehlerfreien Oberfläche und lösen sich nach Erreichen einer gewissen Größe, was zu Beschädigungen der Platinenbahn führt. Wenn hingegen, gemeinsam mit der funktionellen Schichte, eine zweite Schichte als äußerste Schichte mitextrudiert wird, die beispielsweise 30 % PE-LD und 70 % PP aufweist, so wird einerseits die Siegelfähigkeit gegenüber einem PP Behälter weiter verbessert, andererseits die Ausbildung des Düsenbartes zuverlässig vermieden. Da darüber hinaus zwischen der funktionellen Schichte und der zweiten Schichte hervorragende Haftbedingungen gegeben sind, wird eine derartige Ausbildung bevorzugt.

Bei verschiedenen Tests wurden hervorragende Resultate mit den genannten Materialen erzielt, wenn der "Haftvermittler" mit 7 bis 8 g/m², die funktionelle Schicht mit etwa 12 g/m² und die zweite Schicht mit etwa 5 g/m² aufgebracht wurden. Die Ergebnisse legen nahe, dass insbesondere die Menge des "Haftvermittlers" noch reduziert werden kann.

Nur als obiter dictum soll darauf hingewiesen werden, dass sowohl die funktionelle Schicht als auch die zweite Schicht Füllstoffe, insbesondere Talk, in den Mengen enthalten kann, die bei der Herstellung von Platinen üblich sind. Drei Beispiele für die Zusammensetzung der funktionellen Schicht sollen dies verdeutlichen.

| **Bestandteil** | **Beispiel 1** | **Beispiel 2** | **Beispiel 3** |
|---|---|---|---|
| | **(Gew.-%)** | **(Gew.-%)** | **(Gew.-%)** |
| PE-LD | 20 | 24 | 15 |
| PP-Homopolymer* | 30 | 56 | 40 |
| PP-Randomcopolymer | 40 | 0 | 0 |
| TPO thermoplastisches Polyolefin | 0 | 0 | 35 |
| Talk | 10 | 20 | 10 |

| | | | |
|---|---|---|---|
| * Mischung aus verschiedenen PP Typen mit unterschiedlicher Viskosität | | | |

Als Laserquelle kann beispielsweise ein StarScribe CW der Carl Baasel Lasertechnik aus Stamberg, Deutschland, verwendet werden. Dieser CO₂ Laser ist insbesondere für das Ritzen von Folienlaminaten geeignet und weist eine Wellenlänge von 10,6 µm bei einer Leistung von 300 W, bei einigen Modellen auch 360 W und in Sonderfällen bis 450 W, bei einigen Modellen auch Wellenlängen von 10,25 µm, auf. Das in Form eines endlosen Bandes vorliegende Platinenmaterial (meist in einer Breite von zwei Platinen versetzt nebeneinander) wird, mit der Kunststoffschichte dem Laser zugewandt, und auf einer passenden Auflage gleitend, von einem Vorratswickel kommend, am Laser vorbeigezogen und nach der Bearbeitung auf einer Trommel aufgewickelt. Der Laserstrahl wird durch um zwei oder drei Achsen bewegliche Spiegel passend über die Oberfläche geführt, die Laserquelle ist üblicherweise stationär angeordnet.

Die Fokussierung (bzw deren theoretisches Zentrum) des Strahls erfolgt bevorzugt auf einen Punkt oberhalb, bevorzugt knapp oberhalb der Aluminiumfolie, sodass die größte Intensität des Energieeintrags tief im Inneren der zumeist mehrschichtigen Kunststoffschichte (soweit die Bezeichnung "tief" bei den angegebenen Dicken überhaupt passend ist) liegt. Als Richtwert kann angegeben werden, dass die Fokussierung, von der Seite des Lasereintrags her gesehen, an einer Stelle erfolgen soll, die in einer Tiefe zwischen 75 % und 90 %, bevorzugt zwischen 80 % und 85 % der Dicke der zu lasernden Schicht liegt. Die zu lasernde Schichte ist die Schichte zwischen der äußersten Oberfläche der Platine und der dem Laser zugewandten Oberfläche der Aluminiumfolie. Die Fokussierung selbst erreicht Durchmesser von 150 µm bis 350 µm, bevorzugt werden die Bereiche, die zwischen 170 µm und 210 µm liegen. Dadurch wird die Schwächung des Materials im Zuge der Bewegung des Lasers auf einen nur sehr schmalen Bereich konzentriert, überschüssige Energie wird durch die gut Wärme leitende, nahe Aluminiumfolie rasch und unschädlich abgeführt.

Als eine einfache, aber zuverlässige Faustregel kann gesagt werden, dass die Schwächung der Kunststoffschichte dann schon ausreichend, aber noch nicht zu groß ist, wenn auf der Oberfläche der Aluminiumfolie nach dem Entfernen der Kunststoffschichte ein mit freiem Auge bei genauer Betrachtung erkennbarer linienförmiger Bereich mit (gegenüber der Umgebungsfläche) leicht erhöhter Reflexion besteht. Eine auffällige Linie deutet auf zu starken Energieeintrag hin, eine nicht bzw. auch bei erhöhter Aufmerksamkeit kaum zu erkennende Änderung auf zu geringen Energieeintrag. Diese Kennzeichnung ist zwar nicht wirklich quantifizierbar, doch widersetzt sich die optische Änderung einer objektiveren Angabe.

Die Geschwindigkeit des Auftreffpunktes des Laserstrahls auf der Oberfläche des Platinenmaterials liegt bei einigen mm/s bis zu einigen cm/s, bevorzugt von 5 mm/s bis zu 5 cm/s, abhängig von der Natur und der Dicke der zu schwächenden Schichten und dem gewünschten Grad der Schwächung.

Der bei der genanten Betriebsweise erhaltene Einschnitt ist derart schmal, dass das Gut, auch wenn es in flüssiger Form vorliegt, nicht zum Aluminium vordringen kann. Auch wird durch den bis zum Abkühlen erfolgenden Verlagerungsprozess des geschmolzenen, zumindest aber erweichten Kunststoffs der Störungsbereich, der die Form einer extrem schmalen Nut aufweist, zumindest am Grund wieder gefüllt, ohne dass dies zu einer Wiederherstellung der mechanischen Festigkeit der beeinträchtigten Schicht führt.

Um die Folie beim Bewegen über die Auflage eben zu halten, kann die Auflage mit Öffnungen versehen sein, die mit einer Saugvorrichtung verbunden sind und so die Folie zufolge der Druckdifferenz gegen die definierte Oberfläche der Auflage saugt. Das richtige Maß des Unterdrucks kann vom Fachmann anhand einiger weniger Versuche in Abhängigkeit von der Foliengeschwindigkeit, der Folienstärke und der Qualität der erhaltenen Schwächungslinie festgestellt werden.

Durch diese Kombination von Materialien und deren Behandlung erreicht man das oben angegebene Ziel auch in großtechnischem Maßstab mit ausreichender Genauigkeit, Zuverlässigkeit und zu kaufmännisch akzeptablen Kosten.

Es wird angenommen, dass auch andere Laserarten in der Lage sind, passende Schwächungslinien herzustellen, doch hat bei den Versuchen der Anmelderin der CO₂-Laser die Besten Resultate gebracht. Die Fortschritte auf dem Gebiet der Lasertechnik haben in neuster Zeit auch die Verwendung von der CO₂-Lasern mit einer Leistung von 100 W bei sonst nahezu unveränderten Betriebsparametern möglich gemacht, derartige Laser sind in Kenntnis der Erfindung und der angestrebten Platine vom Fachmann auf dem Gebiet der Platinenherstellung nach wenigen Versuchen passend einsetzbar.

Auf jeder einzelnen Platine wird so zumindest eine in sich geschlossene Schwächungslinie aufgebracht, die die spätere Trinköffnung definiert. Zusätzlich kann durch eine weitere Schwächungslinie eine weitere, dann bevorzugt kleinere Öffnung definiert werden, die entweder für den Luftzutritt beim Trinken oder zum Einstecken eines Trinkhalmes dient.

Eine in der Praxis bewährte Ausgestaltung betrifft die Ausbildung der Schwächungslinie im Bereich der Öffnungslasche in Form einer Schlangenlinie, die sich um die kommende Siegelnaht "windet". Dies stellt sicher, dass sowohl das Öffnen der Verpackung als auch das Trennen der Kunststoffschichte von der Aluminiumfolie zuverlässig und sauber erfolgen. Ohne diese Maßnahme kommt es, besonders bei PP-basierenden Kunststoffschichten, gar nicht oder nur sehr mangelhaft zur Trennung der beiden Schichten.

Die Herstellung der Schwächungslinie mittels Laser ist auf der fertigen Platine leicht erkennbar, da nur bei der Herstellung mittels eines Lasers die oben erläuterte optische Veränderung auf der Aluminiumschichte entsteht. Sowohl beim rein mechanischen als auch beim mechanisch-thermischen Erzeugen der Schwächungslinie entsteht ein völlig anderes Bild der Schwächungslinie, vor allem ist diese deutlich breiter und legt merkliche Gebiete der Oberfläche der Aluminiumfolie frei.

Ein neues Anwendungsgebiet für derartige Platinen mit nach dem Abzug auf dem Behälterrand verbleibenden, speziell ausgebildete Öffnungen aufweisende Folien sind sogenannte Medikamentenfläschchen, in denen, im Gegensatz zu ihrer Bezeichnung, keine Flüssigkeiten sondern, meist nicht weiter verpackte, feste Pillen, Tabletten, Dragees, Kapseln, etc. in großer Zahl befinden. Durch die erfindungsgemäße Ausbildung der Öffnung in der Folie kann vor dem Versiegeln beim Befüller die große Öffnung zum bequemen und raschen Füllen verwendet werden, und beim Benutzer steht eine passend klein gewählte, das einzeln Herauskollern des stückigen Inhaltes begünstigende kleine Öffnung zur Verfügung.

Statt für Medikamente kann dies auch für Bonbons, Kaugummi in passender Form, Lutschtabletten, Pastillen, etc. verwendet werden.

Die Erfindung ist nicht auf die beschriebenen Beispiele beschränkt, sondern kann verschiedentlich abgewandelt werden. So können insbesondere andere als die angegebenen Kunststoffe bzw. Kunststoffmischungen verwendet werden, wenn auch die Grundlagen, die PE- bzw. PP-basierenden Kunststoffschichten feststehen.

In der oben genannten Ausgestaltung der Erfindung werden diese Ziele - vermeiden des Problems der zu starken Siegelung - dadurch erreicht, dass bei einer Platine der eingangs genannten Art die in sich geschlossenen Schwächungslinie dem Siegelrand auf seiner Innenseite möglichst benachbart angeordnet wird, unter Umständen auch im inneren Bereich des Siegelrandes angeordnet wird, wobei es nicht auf die Art der Herstellung der Schwächungslinie ankommt, wenn auch hier das Lasern bevorzugt wird.

Auf diese Weise erreicht man es, dass beim Abziehen der Platine die Versiegelung nicht abgepeelt wird, sondern der Verbund zwischen der Aluminiumfolie und der Kunststoffschichte in diesem Bereich, wobei allerdings die Kunststoffschichte über praktisch die gesamte Becheröffnung auf der Platine verbleibt und so die gesamte Öffnung frei gibt.

In einer bevorzugten Ausgestaltung befindet sich die Schwächungslinie in einem Bereich relativ zum Siegelrand, der an seiner Innenkontur von einer Linie begrenzt wird, die um die Breite des Siegelrandes nach innen Abstand zur inneren Kante des Siegelrandes aufweist und dessen äußere Kontur innerhalb des Siegelrandes verläuft, wobei der Abstand von der inneren Kante des Siegelrandes nicht mehr als ein Drittel, bevorzugt nicht mehr als ein Viertel, der Breite des Siegelrandes beträgt. Durch diese Maßnahmen wird, auch bei relativ großen Toleranzen bezüglich der Lage des Siegelrandes, sichergestellt, dass einerseits die Schwächungslinie möglichst genau mit dem Innenrand des Bechers bzw. der Becheröffnung zusammenfällt und andererseits die Schwächungslinie nicht so tief in dem Siegelrand liegt, dass von dort ausgehend eine Abpeelen zwischen Aluminiumfolie und Kunststoffschichte erfolgt, wodurch ja die Kunststoffschichte am Becherrand verbleiben würde.

Die Erfindung wird im Folgenden anhand der Zeichnung näher erläutert. Dabei zeigt bzw. zeigen
die Fig. 1 den oberen Randbereich eines teilweise geöffneten Bechers,
die Fig. 2 eine Unteransicht einer Platine und
die Fig. 3 ein Detail.

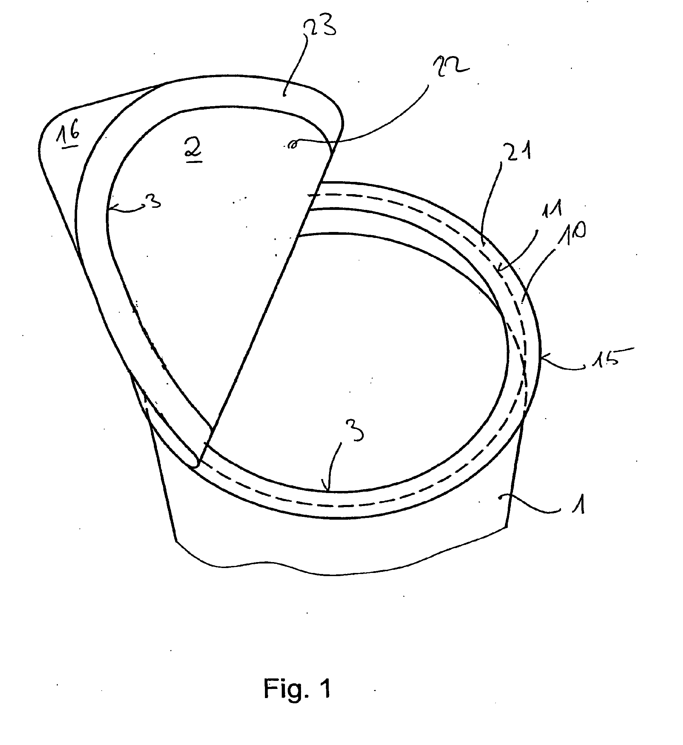

Die Fig. 1 zeigt eine perspektivische, schematische Ansicht des oberen Bereiches eines Bechers 1, der mit einer erfindungsgemäßen Platine 2, die teilweise abgepeelt ist, verschlossen ist/war. Am Siegelrand 10 des Bechers 1 ist ein ringförmiger Teil 21 der Platine 2, bestehend aus der Aluminiumschicht und der aufkaschierten Kunststofffolie, verbleiben, entlang der Schwächungslinie 3 erfolgt die Trennung. Strichliert mit 11 ist die innere Kontur des Siegelrandes angedeutet, um die Nähe dieser inneren Kontur 11 des Siegelrands und der Schwächungslinie 3 zu zeigen.

Der abgepeelte Teil der Platine 2 weist in seinem zentralen Teil 22 die Aluminiumschicht und die aufkaschierte Kunststofffolie auf, in seinem Randteil 23 nur die Aluminiumschicht, da in diesem Bereich die Kunststofffolie auf dem Siegelrand 10 verbleibt.

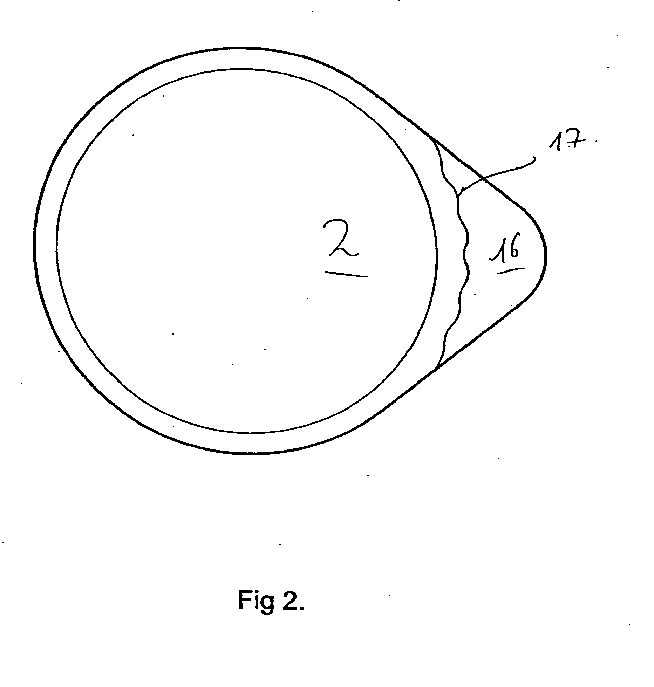

Aus Fig. 2 ist ersichtlich, dass im Bereich der Lasche 16 eine äußere Schwächungslinie 17, gegebenenfalls gewellt ausgebildet, vorgesehen sein kann, um das Abtrennen des am Siegelrand verbleibenden Ringteils 21 zu erleichtern, ohne zu einer Beschädigung der Aluminiumfolie zu führen.

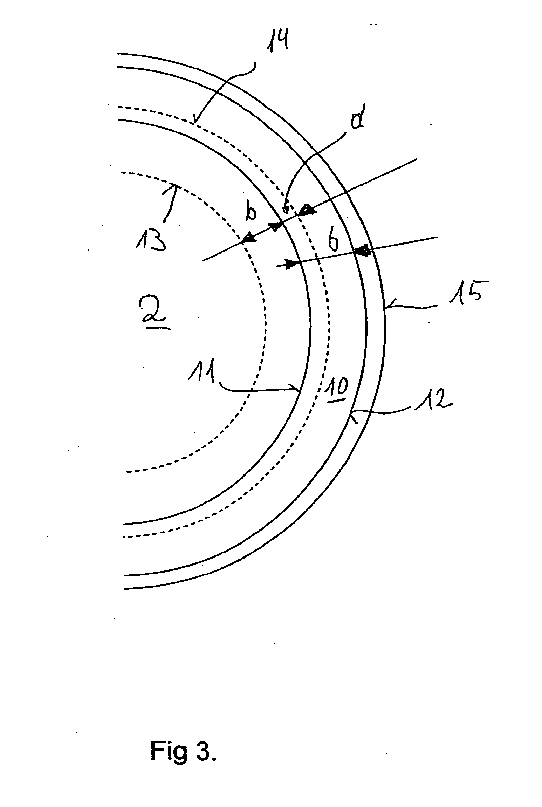

Fig. 3 schließlich stellt einen Siegelrand 10, rein schematisch mit seiner Innenkante 11 und seiner Außenkante 12 und seine Umgebung dar. Es soll nochmals darauf hingewiesen werden, dass die genaue Lage des Siegelrandes 10 sowohl am Becherrand als auch auf der Platine erst bei der Versiegelung des Bechers durch die Einstellung der Siegelmaschine und die auftretenden Toleranzen beim Auflegen der Platine auf den Becherrand festgelegt wird, die Figur geht somit zu Anschauungszwecken von einer bereits versiegelten Platine aus.

Dies vorausgesetzt, soll nun die Schwächungslinie (nicht dargestellt) in einem Bereich zum Siegelrand bzw. zur Siegelnaht liegen, der durch zwei Linien 13, 14 gegeben ist: Die innere Begrenzungslinie 13 liegt in einem Abstand von maximal 2b, bevorzugt von maximal b, von der inneren Kontur 11 des Siegelrands entfernt, wobei b die Breite des Siegelrands bedeutet. Die äußere Begrenzungslinie 14 wiederum weist einen Abstand d von der inneren Kontur 11 des Siegelrandes 10 auf, der maximal ein Drittel, bevorzugt aber maximal ein Viertel, der Breite b des Siegelrandes 10 nicht überschreitet: d ≤ b/3 bzw. bevorzugt: d ≤ b/4.

In Kenntnis der Toleranzen der verwendeten Vorrichtungen ist es nun für den Fachmann auf dem Gebiete der Platinenherstellung leicht möglich, auf der Platine 2, deren Außenrand noch mit 15 eingezeichnet ist und von der ja der Konstrukteur auszugehen hat, die bestmögliche Lage der Schwächungslinie zu bestimmen. Die Lage des Außenrandes des Bechers 1 ist aus Gründen der Übersichtlichkeit in keiner der Figuren eingezeichnet.

Um auch bei Platinen, die noch nicht gesiegelt sind, das Erfüllen der erfindungsgemäßen Kennzeichen leichter überprüfen zu können, soll noch ausgeführt werden, dass die Schwächungslinie zumindest 70 %, bevorzugt zumindest 75 % oder besser 85 % der Oberfläche der Platine, ohne Berücksichtigung einer eventuell vorhandenen Lasche, umschließt, je größer die Fläche der Platine, umso größer der umschlossene Anteil. Dem entspricht bei einer kreisrunden Platine mit einem Außendurchmesser von 75 mm (und Vernachlässigung der Lasche) ein Durchmesser der ebenfalls kreisförmigen Schwächungslinie von (etwa) 68 mm bzw von (etwa) 70 mm, unter Vernachlässigung etwaiger Schlangenlinien oder anderer Ausgestaltungen.

Bei einem Außendurchmesser von 95 mm der Platine ist erfindungsgemäß mit einem Durchmesser der Schwächungslinie von 81 bis 85 mm, je nach Ausbildung des Siegelrandes, zu rechnen, das entspricht einem umschlossenen Flächenanteil von 72 % bis 80%.

## Patentansprüche

1. Verfahren zur Herstellung einer Platine zum Verschließen eines Bechers entlang eines umlaufenden Siegelrandes (10), wobei die Platine (2) zumindest eine Aluminiumfolie und eine, gegebenenfalls mehrlagige, auf die Aluminiumfolie koextrudierte Kunststoffschichte aufweist, wobei in der Kunststoffschichte eine in sich geschlossene Schwächungslinie (3) vorgesehen ist, wobei zumindest eine Lage der Kunststoffschichte entweder aus auf Polyethylen (PE) basierendem Kunststoff oder aus auf Polypropylen (PP) basierendem Kunststoff besteht und wobei die Schwächungslinie mittels eines Lasers in die Kunststoffschichte eingebracht worden ist, **dadurch gekennzeichnet, dass** das in Form eines endlosen Bandes vorliegende Platinenmaterial, mit der Kunststoffschichte dem Laser zugewandt und auf einer passenden Auflage gleitend, an diesem vorbeigezogen wird und dass der Laserstrahl auf einen Durchmesser von 150 µm bis 350 µm, bevorzugt 210 µm fokussiert wird, und dass die Fokussierung des Strahls auf eine Stelle oberhalb der Aluminiumfolie, im Inneren der Kunststoffschichte, erfolgt.

2. Verfahren nach Anspruch 1, **dadurch gekennzeichnet, dass** die Fokussierung in einer Tiefe zwischen 75 % und 90 %, bevorzugt zwischen 80 % und 85 % der Dicke der zu lasernden Schicht, von der Seite des Lasereintrags her gesehen, liegt.

3. Verfahren nach Anspruch 1, **dadurch gekennzeichnet, dass** die Wellenlänge des Lasers zwischen 10,2 µm und 10,8 µm liegt.

4. Verfahren nach einem der Ansprüche 1 bis 3, **dadurch gekennzeichnet, dass** der Laserstrahl eine Energie von 100 W bis 450W, bevorzugt von 300W, aufweist.

5. Verfahren nach einem der Ansprüche 1 bis 4, **dadurch gekennzeichnet, dass** die Geschwindigkeit des Auftreffpunktes des Laserstrahls auf der Oberfläche des Platinenmaterials zwischen 5 mm/s und 50 mm/s liegt.

## Claims

1. Method for producing a lid for closing a cup along a circumferential sealing rim (10), the lid (2) comprising at least an aluminium foil and an optionally multilayer plastics material film, coextruded onto the aluminium foil, a cohesive line of weakness (3) being provided in the plastics material film, at least a layer of the plastics material film consisting of either polyethylene (PE)-based plastics material or polypropylene (PP)-based plastics material and the line of weakness being introduced into the plastics material film by means of a laser, **characterised in that** the lid material in the form of a continuous strip, having the plastics material film facing the laser and sliding on an appropriate support, is conveyed past the laser, and **in that** the laser beam is focussed on a diameter of from 150 µm to 350 µm, preferably 210 µm, and **in that** the beam is focussed on a point above the aluminium foil, inside the plastics material film.

2. Method according to claim 1, **characterised in that** the focusing is at a depth of between 75 % and 90 %, preferably between 80 % and 85 % of the thickness of the layer being treated by the laser when viewed from the side of incidence of the laser.

3. Method according to claim 1, **characterised in that** the laser has a wavelength of between 10.2 µm and 10.8 µm.

4. Method according to any of claims 1 to 3, **characterised in that** the laser beam has a power of from 100 W to 450 W, preferably of 300 W.

5. Method according to any of claims 1 to 4, **characterised in that** the speed of the point of incidence of the laser beam on the surface of the lid material is between 5 mm/s and 50 mm/s.

## Revendications

1. Procédé de fabrication d'un opercule destiné à fermer un récipient le long d'un rebord périphérique (10) d'étanchéité, lequel opercule (2) comporte au moins une feuille d'aluminium et une couche, comportant éventuellement plusieurs strates, de matière synthétique coextrudée sur la feuille d'aluminium, dans laquelle couche de matière synthétique une ligne d'affaiblissement (3) fermée sur elle-même est pratiquée, au moins une strate de la couche de matière synthétique est constituée soit d'une matière synthétique à base de polyéthylène (PE), soit d'une matière synthétique a base de polypropylène (PP), et la ligne d'affaiblissement a été pratiquée dans la couche de matière synthétique à l'aide d'un laser, **caractérisé en ce qu'**on fait passer devant le laser le matériau d'opercule qui se présente sous la forme d'une bande sans fin et dont la couche de matière synthétique est tournée vers le laser, en le faisant glisser sur un support approprié, et **en ce que** le faisceau laser est focalisé jusqu'à présenter un diamètre de 150 à 350 µm et de préférence 210 µm, et que le point de localisation du faisceau est situé au-dessus de la feuille d'aluminium, au sein de la couche de matière synthétique.

2. Procédé conforme à la revendication 1, **caractérisé en ce que** le point de focalisation est situé à une profondeur de 75 à 90 % et de préférence de 80 à 85 % de l'épaisseur de la couche exposée au laser, à compter depuis la face frappée par le laser.

3. Procédé conforme à la revendication 1, **caractérisé en ce que** la longueur d'onde du laser vaut de 10,2 à 10,8 µm.

4. Procédé conforme à l'une des revendications 1 à 3, **caractérisé en ce que** la puissance du faisceau laser vaut de 100 à 450 W et de préférence 300 W.

5. Procédé conforme à l'une des revendications 1 à 4, **caractérisé en ce que** la vitesse de déplacement du point d'incidence du faisceau laser sur la surface du matériau d'opercule vaut de 5 à 50 mm/s.
